(19) Europäisches Patentamt / European Patent Office / Office européen des brevets

(11) **EP 3 002 887 B1**

(12) **EUROPEAN PATENT SPECIFICATION**

(45) Date of publication and mention of the grant of the patent:
**28.03.2018  Bulletin 2018/13**

(51) Int Cl.:
**H04B 7/04** *(2017.01)*        **H04B 7/06** *(2006.01)*

(21) Application number: **15179715.6**

(22) Date of filing: **04.08.2015**

(54) **OPEN-LOOP PRECODER AND OPEN-LOOP PRECODING METHOD IN MULTIPLE-INPUT MULTIPLE-OUTPUT SPATIAL MULTIPLEXING SYSTEM**

OPEN-LOOP-VORCODIERER UND OPEN-LOOP-VORCODIERUNGSVERFAHREN IN EINEM RÄUMLICHEN MIMO-MULTIPLEXING-SYSTEM

PRÉCODEUR EN BOUCLE OUVERTE ET PROCÉDÉ DE PRÉCODAGE EN BOUCLE OUVERTE DANS UN SYSTÈME DE MULTIPLEXAGE SPATIAL À ENTRÉES MULTIPLES ET SORTIES MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2014  KR 20140131679**

(43) Date of publication of application:
**06.04.2016  Bulletin 2016/14**

(73) Proprietor: **Foundation for Research & Business, Seoul National University of Science & Technology Seoul (KR)**

(72) Inventors:
  • **JANG, Jung Yup**
    **131-818 Seoul (KR)**
  • **KIM, Dong Ho**
    **135-927 Seoul (KR)**

(74) Representative: **Kuhnen & Wacker Patent- und Rechtsanwaltsbüro PartG mbB Patent- und Rechtsanwaltsbüro Prinz-Ludwig-Straße 40A 85354 Freising (DE)**

(56) References cited:
    **KR-A- 20130 033 961      KR-A- 20150 010 490**

  • **JOONTAE KIM ET AL: "Mitigation of transmit correlation for TIMO spatial multiplexing through phase rotation", IEEE COMMUNICATIONS LETTERS, IEEE SERVICE CENTER, PISCATAWAY, NJ, US, vol. 12, no. 2, 1 February 2008 (2008-02-01), pages 118-120, XP011204069, ISSN: 1089-7798**
  • **SUNG-HYUN MOON ET AL: "Statistical Precoder Design for Spatial Multiplexing Systems in Correlated MIMO Fading Channels", 2010 IEEE VEHICULAR TECHNOLOGY CONFERENCE (VTC 2010-SPRING) - 16-19 MAY 2010 - TAIPEI, TAIWAN, IEEE, US, 16 May 2010 (2010-05-16), pages 1-5, XP031695930, ISBN: 978-1-4244-2518-1**

**Description**

CROSS REFERENCES TO RELATED APPLICATIONS

The present invention contains subject matter related to Korean Patent Application No. 2014-0131679, filed in the Korean Patent Office on September 30, 201 4.

BACKGROUND OF THE INVENTION

Field of the Invention

The present invention relates to a multiple-input multiple-output (MIMO) system as a multi-antenna system, and more particularly, to an open-loop precoder and an open-loop precoding method in a MIMO system, capable of preventing performance degradation of receive signals in an open-loop transmit correlation MIMO fading channel, in which a channel state is not fed back from a receive side, such as a broadcast system or a mobile communication system.

Description of Related Art

The KR 20150010490 A discloses a multiple-input multiple-output (MIMO) system which is a multiple antenna system, and more particular, a pre-coding apparatus and method in an open loop MIMO system, which is capable of preventing the performance degradation of an open loop transmit-correlated MIMO fading channel in which a channel environment is not fed back from a reception party, such as a broadcasting system.

The KR 20130033961 A discloses an orthogonal complex pre-coding apparatus in an open loop multiple antenna system and a method thereof to prevent the deterioration of the reception performance of a transmission signal in a channel without the feedback information of a receiver, thereby lowering the PEP (Pairwise Error Probability). An open loop multiple antenna system transmitter includes a signal separating unit, a modulating unit, a conditional searching unit, a pre-code determining unit, a pre-coding applying unit and a transmitting unit. The transmitting unit includes at least two or more transmission antennas and transmits spatially multiplexed transmission signals. The signal separating unit separates the transmission signals in order to correspond to the number of transmission antennas. The modulating unit modulates and outputs the separated transmission signals. The conditional searching unit searches a condition of a phase parameter value in which the complex matrix of a pre-code about the number of transmission antennas has an orthogonal property. The pre-code determining unit determines an optimal pre-code which minimizes system errors by being based on the searched condition and assuming a worst channel environment. The pre-coding applying unit applies the determined pre-code to the separated and modulated signals outputted from the modulating unit and outputs the signals to the transmitting unit.

Recently, there are a lot of demands for a high-rate data transmission technology for next-generation broadcast services such as 3-dimensional television (3DTV) and ultra high definition television (UHDTV) services. For these demands, a multi-antenna-based MIMO transmission scheme has been studied in the European digital television standard (DVB: Digital Video Broadcasting) and the United States digital television standard (ATSC: Advanced Television Systems Committee).

The MIMO transmission scheme has some problems such as performance degradation in application depending on constraints of the broadcast system. For this reason, an open-loop precoding scheme was employed as a standard in the mobile TV format, DVB-NGH (Digital Video Broadcasting - Next Generation Handheld).

Currently, various open-loop precoding schemes are in discussion as a standard technology for the next generation broadcast systems such as ATSC-3.0.

Recently, many studies have been made in the art for the MIMO systems capable of improving receive performance and increasing a data transmission capacity.

Specifically, compared to conventional techniques in which a single transmit antenna and a single receive antenna are employed (for example, a single-Input single-output (SISO) scheme), the MIMO scheme is a communication scheme capable of improving transmission efficiency of transmit/receive data and increasing a data transmission capacity by employing multiple transmit antennas and multiple receive antennas and spatial division multiplexing (hereinafter, referred to as "spatial multiplexing").

In such a spatial multiplexing scheme of the MIMO system, serious degradation may occur in the receive performance due to correlation of channels between transmit antennas.

In order to prevent such performance degradation of the receive signal, a feedback technique is employed, in which a receiver estimates a channel state from the signal received via the spatially multiplexed channel and feeds back the estimated channel state information to a transmitter to reflect the channel state to the transmit signal.

Such a feedback type MIMO system has a transmitter equipped with multiple transmit antennas and a receiver equipped with multiple receive antennas.

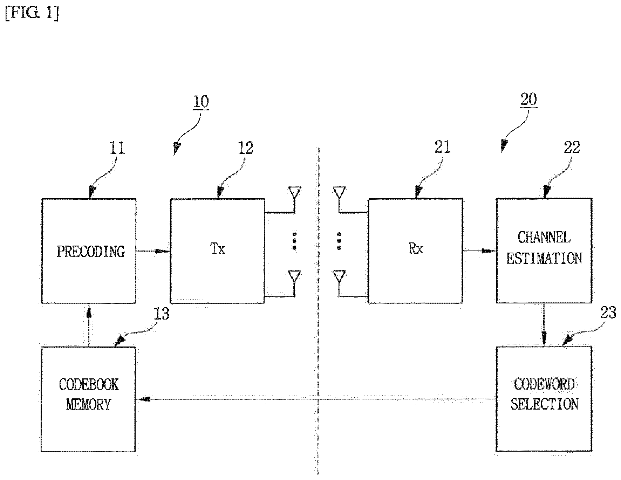

FIG. 1 is a schematic block diagram illustrating a typical codebook-based feedback type MIMO system.

Referring to FIG. 1, in the codebook-based MIMO system, the transmitter 10 selects codebook sets designed in advance and stored in a codebook memory 13, and a precoding application unit 11 applies precoding to the decomposed transmit (Tx) signal, so that the precoded signal is transmitted. The receiver 20 receives the transmit signal subjected to the precoding, and the channel estimation unit 22 estimates a channel state from the receive (Rx) signal. The code selection unit 23 stores optimum codewords capable of minimizing system errors under various channel states and selects one of the codewords matching the estimated channel state, so that the selected code index is transmitted to the transmitter 10 via a feedback channel. In this case, the transmitter 10 searches one of the codewords matching the code index received via the feedback channel from the codebook 13 and outputs it to the precoding application unit 11, and the precoder 11 applies the input codeword to the decomposed transmit signal to transmit it via the transmit antennas of the Tx unit 12, so that the precoded Tx signals are transmitted via the corresponding antennas of the Tx unit 12. The aforementioned channel estimation and codeword selection technique is well known in the art, and will not be described in detail herein.

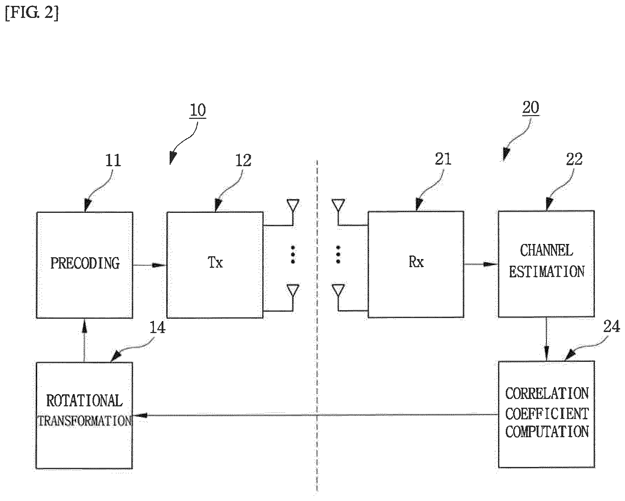

FIG. 2 is a schematic block diagram illustrating a typical rotational transformation-based feedback type MIMO system.

Referring to FIG. 2, the rotational transformation-based MIMO system includes a correlation coefficient computation unit 24 configured to compute a correlation coefficient from the channel state information estimated by the channel estimation unit 22 of the receiver 20 and transmit the computed correlation coefficient to the transmitter 10 via the feedback channel. The transmitter 10 has a rotational transformation unit 14 configured to compute parameters for the precoding to minimize system errors using the correlation coefficient received from the correlation coefficient computation unit 24 based on a rotational transformation method, power allocation, and a representative matrix and output the precoders obtained by applying the computed parameters to the precoding application unit 11. The aforementioned correlation coefficient computation method, the rotational transformation method, and the method of computing the precoding parameters to minimize system errors using power allocation and matrices are already known to those skilled in the art, and will not be described in detail herein.

As described above, by estimating the MIMO channel state from the transmit signal transmitted from the transmitter and feeding back the estimated channel state information to the transmitter, it is possible to prevent channel performance degradation caused by the spatial multiplexing.

In order to overcome such performance degradation caused by the channel correlation of the spatial multiplexing scheme of the prior art, various codebook-based precoding techniques have been proposed, in which channel information regarding channel correlation in a closed-loop system is fed back from the receiver, and precoding is performed in the transmitter.

As illustrated in FIG. 1, in the codebook-based technique, codebook sets designed in advance are selected, and precoding is applied in the transmitter. In this case, a codeword selector provided in the receiver selects the optimum codeword capable of minimizing system errors, and the corresponding code index is transmitted to the transmitter via the feedback channel.

In the matrix-based precoding technique, the correlation coefficient is fed back to a correlation coefficient computer of the receiver, and precoding parameters for minimizing system errors is computed based on rotational transformation, power allocation, and representative matrices, so that the precoding is applied.

However, in the prior art, it is difficult to apply the conventional techniques to broadcast systems and mobile communication systems not allowed to obtain feedback information from the receiver.

[Citation List]

[Patent Literatures]

[Patent Literature 1] Korean Patent Application Publication No. 10-2010-0114346

SUMMARY OF THE INVENTION

In view of the aforementioned problems, the present invention has been made to provide an open-loop precoding method capable of reducing performance degradation depending on correlation characteristics of channels without feedback information in an open-loop system such as a broadcast system and a mobile communication system.

The object of the present invention is not limited to those described above, and a person skilled in the art would apparently appreciate other objects by reading the following description.

According to an aspect of the present invention, there is provided an open-loop precoder of a multiple-input multiple-output (MIMO) spatial multiplexing system having a transmitter that is provided with at least two transmit antennas and transmits spatially multiplexed transmit signals and a receiver that is provided with at least two receive antennas and receives the spatially multiplexed transmit signals from the transmitter, the open-loop precoder comprising: a signal decomposition and modulation unit configured to decompose a signal to be transmitted to match the number of the transmit antennas and modulate the decomposed signals; an orthogonal complex matrix condition search unit having a precoding matrix for the number of the transmit antennas; an error minimization parameter determination unit configured to determine an optimum parameter of the precoding matrix such that an error is minimized by assuming a worst channel state; a precoding application unit configured to apply the precoding matrix having the determined parameter to the decomposed and modulated transmit signals output from the signal decomposition and modulation unit; and a transmit unit configured to transmit each of the transmit signals subjected to the precoding matrix via the corresponding transmit antennas.

The orthogonal complex matrix condition search unit may have the precoding matrix including a rotational matrix and a phase rotation matrix.

The precoding matrix may be expressed as

[Equation 1]

$$\mathbf{F} = \begin{bmatrix} \cos\theta & -\sin\theta \\ \sin\theta & \cos\theta \end{bmatrix} \begin{bmatrix} 1 & 0 \\ 0 & e^{j\varphi} \end{bmatrix}, \mathbf{F} = \begin{bmatrix} \cos\theta & -\sin\theta \\ \sin\theta & \cos\theta \end{bmatrix} \begin{bmatrix} 1 & 0 \\ 0 & e^{j\varphi} \end{bmatrix}$$

where a first term is the rotational matrix, and a second term is the phase rotation matrix.

A channel correlation matrix may be defined as

[Equation 2]

$$R_T = \begin{bmatrix} 1 & \alpha e^{j\beta} \\ \alpha e^{-j\beta} & 1 \end{bmatrix}, \ 0 \leq \alpha \leq 1, \ 0 \leq \beta \leq 2\pi,$$

a pairwise error probability (PEP) may be defined as

[Equation 3]

$$PEP_{i,j} \leq \frac{1}{\left( \frac{SNR}{4N_T} \left\| R_T^{\frac{1}{2}} F(x_i - x_j) \right\|^2 \right)^{N_R}},$$

where "$R_T$" denotes the channel correlation matrix, "$N_T$" denotes the number of the Tx antennas, "$N_R$" denotes the number of the Rx antennas, "$F$" denotes the precoding matrix, and "$(x_i$-$x_j)$" denotes a difference of codewords depending on a modulation order,

an average PEP may be defined as

[Equation 4]

$$P_e(\theta, \varphi) = E\left\{ \sum_{i=1}^{M^{N_T}} \sum_{j=1, i \neq j}^{M^{N_T}} PEP_{i,j} \right\},$$

the error minimization parameter determination unit may set a transmit correlation coefficient to "1" and determines an optimum parameter capable of minimizing the PEP depending on the modulation order, the transmit correlation coefficient having a value ranging between "0" and "1" for phase parameters of each component of the precoding matrix and being set to "0" under a best channel state and "1" under a worst channel state.

The error minimization parameter determination unit may obtain an optimum value of the parameter $\beta$ capable of minimizing the average PEP by fixing the parameter $\alpha$ to "1" ($\alpha$=1) in the precoding matrix and the channel correlation matrix, and the phase $\theta$ may be obtained such that the average PEP is minimized by setting a phase $\varphi$ and then assuming a worst channel state ($\alpha$=1), whereby this process can be expressed as

[Equation 5]

$$\theta_{opt}, \varphi_{opt} = \arg \min P_e(\theta, \varphi)$$

According to an embodiment of the present invention, best performance is exhibited when the phase $\varphi$ is set to $\pi$/4 ($\varphi=\pi$/4) within a range of $\pi$/6$\leq\varphi\leq\pi$/3.

According to another aspect of the present invention, there is provided an open-loop precoding method in a multiple-input multiple-output (MIMO) spatial multiplexing system having a transmitter that is provided with at least two transmit antennas and transmits spatially multiplexed transmit signals and a receiver that is provided with at least two receive antennas and receives the spatially multiplexed transmit signals from the transmitter, the open-loop precoding method comprising: decomposing a signal to be transmitted in the MIMO spatial multiplexing system to match the number of the transmit antennas and modulating the decomposed signals; loading a precoding matrix for the number of the transmit antennas; determining an optimum parameter of the precoding matrix such that an error is minimized by assuming a worst channel state; applying the precoding matrix having the determined parameter to the decomposed and modulated transmit signals; and transmitting each of the transmit signals subjected to the precoding matrix via the corresponding transmit antennas.

The precoding matrix may include a rotational matrix and a phase rotation matrix.

The precoding matrix may be expressed as

[Equation 1]

$$\mathbf{F} = \begin{bmatrix} \cos\theta & -\sin\theta \\ \sin\theta & \cos\theta \end{bmatrix} \begin{bmatrix} 1 & 0 \\ 0 & e^{j\varphi} \end{bmatrix},$$

where a first term is the rotational matrix, and a second term is the phase rotation matrix.

A channel correlation matrix may be defined as

[Equation 2]

$$R_T = \begin{bmatrix} 1 & \alpha e^{j\beta} \\ \alpha e^{-j\beta} & 1 \end{bmatrix}, \quad 0 \leq \alpha \leq 1, \quad 0 \leq \beta \leq 2\pi,$$

a pairwise error probability (PEP) may be defined as

[Equation 3]

$$PEP_{i,j} \leq \frac{1}{\left( \left( \frac{SNR}{4N_T} \right) \left\| R_T^{\frac{1}{2}} F(x_i - x_j) \right\|^2 \right)^{N_R}},$$

where "$R_T$" denotes the channel correlation matrix, "$N_T$" denotes the number of the Tx antennas, "$N_R$" denotes the number of the Rx antennas, "*F*" denotes the precoding matrix, and "*(x$_i$-x$_j$)*" denotes a difference of codewords depending on a modulation order,
an average PEP may be defined as

[Equation 4]

$$P_e(\theta, \varphi) = E\left\{\sum_{i=1}^{M^{N_T}} \sum_{j=1, i\neq j}^{M^{N_T}} PEP_{i,j}\right\},$$

in the determining the optimum parameter of the precoding matrix, a transmit correlation coefficient may be set to "1," and an optimum parameter capable of minimizing the PEP depending on the modulation order may be determined, the transmit correlation coefficient having a value ranging between "0" and "1" for phase parameters of each component of the precoding matrix and being set to "0" under a best channel state and "1" under a worst channel state.

In the determining the optimum parameter of the precoding matrix, an optimum value of the parameter $\beta$ capable of minimizing the average PEP may be obtained by fixing the parameter $\alpha$ to "1" ($\alpha$=1) in the precoding matrix and the channel correlation matrix, and a phase $\theta$ may be obtained such that the average PEP is minimized by setting a phase $\varphi$ and then assuming a worst channel state ($\alpha$=1), whereby this process can be expressed as

[Equation 5]

$$\theta_{opt}, \varphi_{opt} = \arg \min P_e(\theta, \varphi).$$

According to an embodiment of the present invention, best performance is exhibited when the phase $\varphi$ is set to $\pi/4$ ($\varphi=\pi/4$) within a range of $\pi/6 \leq \varphi \leq \pi/3$.

According to the present invention, the decomposed transmit signals are precoded using precoders obtained by assuming the worst transmit correlation coefficient and considering the worst channel state capable of preventing average receive signal performance degradation. Therefore, it is possible to prevent performance degradation of receive signals in channels without feedback information from the receiver and accordingly reduce a pairwise error probability (PEP).

In particular, it is anticipated that the present invention would be very useful in an open-loop system such as a broadcast system or a mobile communication system not allowed to obtain feedback information from a receiver in a multi-antenna spatial multiplexing system.

BRIEF DESCRIPTION OF THE DRAWINGS

The foregoing and additional features and characteristics of this disclosure will become more apparent from the following detailed description considered with reference to the accompanying drawings, wherein:

FIG. 1 is a schematic block diagram illustrating a typical codebook-based feedback type multiple-input multiple-output (MIMO) system;
FIG. 2 is a schematic block diagram illustrating a typical rotational transformation-based feedback type MIMO system;
FIG. 3 is a schematic block diagram illustrating an open-loop precoder in a MIMO spatial multiplexing system according to an embodiment of the present invention;
FIG. 4 is a flowchart illustrating an open-loop precoding method in the MIMO spatial multiplexing system according to an embodiment of the present invention;
FIG. 5 is a graph illustrating average symbol error rate (SER) performance depending on a phase φ in a precoding matrix according to an embodiment of the present invention;
FIG. 6 is a constellation diagram illustrating constellation points depending on the phase φ in the precoding matrix according to an embodiment of the present invention;
FIG. 7 is a diagram illustrating a minimum distance depending on a parameter β for comparing between a conventional technique and the present invention;
FIG. 8 is a graph illustrating SER performance for comparing between a conventional technique and the present invention; and
FIG. 9 is a graph illustrating average SER performance depending on a signal-to-noise ratio (SNR) for comparing between a conventional technique and the present invention.

DETAILED DESCRIPTION OF THE INVENTION

Since the present invention may be modified or embodied in various forms, particular embodiments will be described in detail with reference to the accompanying drawings. However, it should be noted that they are not intended to limit the invention, but include all possible modifications, equivalents, and substitutes within the scope and spirit of the present invention.

The terminology used herein is only for the purpose of describing particular embodiments and is not intended to limit the invention. As used herein, the singular forms "a", "an", and "the" may be intended to include the plural forms as well, unless the context clearly indicates otherwise. It is further to be noted that, as used herein, the terms "comprises", "comprising", "include", and "including" indicate the presence of stated features, integers, steps, operations, units, components, and/or combination thereof, but do not preclude the presence or addition of one or more other features, integers, steps, operations, units, and/or components, and/or combination thereof.

Unless specified otherwise, all terminologies used herein, including technical and scientific terminologies, have the same meanings as those understood generally by a person skilled in art. Terminologies defined in a general dictionary are to be construed as the same meanings as those understood in the context of the related art. Unless specified clearly herein, they are not construed as ideal or excessively formal meanings.

It is noted that like reference numerals denote like elements throughout overall drawings, and descriptions thereof will not be repeated. In addition, descriptions of well-known apparatus and methods may be omitted so as to not obscure the description of the representative embodiments, and such methods and apparatus are clearly within the scope and spirit of the present invention.

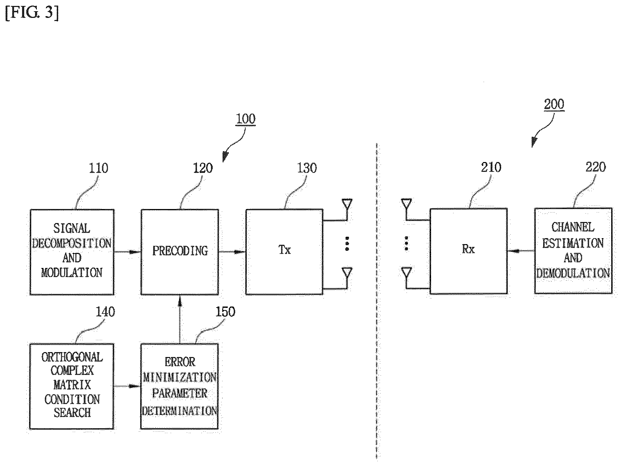

FIG. 3 is a schematic block diagram illustrating an open-loop precoder in a multiple-input multiple-output (MIMO) spatial multiplexing system according to an embodiment of the present invention.

Referring to FIG. 3, the open-loop precoder of the MIMO spatial multiplexing system according to the present invention comprises a transmitter 100 and a receiver 200.

The transmitter 100 has a signal decomposition and modulation unit 110, a precoding application unit 120, a transmit (Tx) unit 130, an orthogonal complex matrix condition search unit 140, and an error minimization parameter determination unit 150.

The signal decomposition and modulation unit 110 decomposes a transmit signal to be transmitted depending on the number of transmit antennas and modulates each of the decomposed transmit signals based on a predefined modulation scheme. The modulation scheme may include any one of existing base band modulation schemes such as quadrature phase shift keying (QPSK), binary phase shift keying (BPSK), 16 quadrature amplitude modulation (16-QAM), 64-QAM, M-ary QAM (M-QAM), 8-PSK, 16-PSK, and M-ary PSK (M-PSK).

The precoding application unit 120 applies the defined precoders to the decomposed and modulated transmit signals output from the signal decomposition and modulation unit 110.

The Tx unit 130 transmits each of the transmit signals output from the precoding application unit 120 via corresponding transmit antennas.

The orthogonal complex matrix condition search unit 140 stores precoding matrices including a rotational matrix and a phase rotation matrix.

The precoding matrix for the number of the transmit antennas is based on a combination of the rotational matrix and the phase rotation matrix. In this case, assuming that the correlation coefficient of the channel is set to zero, and the precoding is applied, performance degradation does not occur because the precoding matrix has an orthogonal characteristic.

For example, in the case of a 2x2 matrix, that is, if two Tx antennas and the two receive (Rx) antennas are provided, the precoding matrix may be given as follows:

[Equation 1]

$$\mathbf{F} = \begin{bmatrix} \cos\theta & -\sin\theta \\ \sin\theta & \cos\theta \end{bmatrix} \begin{bmatrix} 1 & 0 \\ 0 & e^{j\varphi} \end{bmatrix},$$

where "$\theta$" denotes a phase of the rotational matrix, and "$\varphi$" denotes a phase of the phase rotation matrix.

In Equation 1, the first matrix is the rotational matrix, and the second matrix is the phase rotation matrix.

The error minimization parameter determination unit 150 determines an optimum precodeer capable of minimizing system errors by assuming the worst channel state.

According to the present invention, the channel correlation matrix is defined as follows:

[Equation 2]

$$R_T = \begin{bmatrix} 1 & \alpha e^{j\beta} \\ \alpha e^{-j\beta} & 1 \end{bmatrix}, \ 0 \le \alpha \le 1, \ 0 \le \beta \le 2\pi$$

In addition, according to the present invention, a pairwise error probability (PEP) can be defined as follows:

[Equation 3]

$$PEP_{i,j} \le \frac{1}{\left( \frac{SNR}{4N_T} \left\| R_T^{\frac{1}{2}} F(x_i - x_j) \right\|^2 \right)^{N_R}},$$

where "$R_T$" denotes the channel correlation matrix, "$N_T$" denotes the number of the Tx antennas, "$N_R$" denotes the number of the Rx antennas, "F" denotes the precoding matrix, and "$(x_i$-$x_j)$" denotes a difference of the codeword depending on the modulation order.

In addition, according to the present invention, an average PEP can be defined as follows:

[Equation 4]

$$P_e(\theta, \varphi) = E\left\{ \sum_{i=1}^{M^{N_T}} \sum_{j=1, i \ne j}^{M^{N_T}} PEP_{i,j} \right\},$$

Specifically, the error minimization parameter determination unit 150 sets the transmit correlation coefficient to "1" for the phase parameters of each component of the precoding matrix of the orthogonal complex matrix condition search unit 140 and obtains an optimum parameter capable of minimizing the PEP depending on the modulation order (the transmit correlation coefficient has a value ranging between "0" and "1 ". If the transmit correlation coefficient is set to zero, that means the optimum channel state. If the transmit correlation coefficient is set to "1", that means the worst channel state).

That is, the error minimization parameter determination unit 150 obtains an optimum value of the parameter $\beta$ capable of minimizing the average PEP by fixing the parameter $\alpha$ to "1" ($\alpha$=1) in the precoding matrix and the channel correlation matrix.

Under such a condition, best performance is exhibited when the phase $\varphi$ is set to $\pi/4$ ($\varphi=\pi/4(=45°)$ within a range of "$\pi/6(=30°)\le\varphi\le\pi/3(=60°)$".

The phase $\theta$ is obtained by determining the value (p in advance, assuming the worst condition of the parameter $\alpha$ ($\alpha$=1), and minimizing the average PEP. This process can be expressed as follows:

[Equation 5]

$$\theta_{opt}, \varphi_{opt} = \arg \min P_e(\theta, \varphi)$$

The receiver 200 has Rx antennas whose number matches the number of the Tx antennas of the Tx unit 130. In addition, the receiver 200 has an Rx unit 210 that receives the transmit signals transmitted from the transmitter 100 and outputs them and a channel estimation and demodulation unit 220 that demodulates the transmit signals received via the Rx unit 210 (hereinafter, referred to as "Rx signals") and combines them into a single signal.

The receiver 200 according to the present invention has a configuration similar to that of the conventional receiver. Since signals are transmitted by assuming the worst channel state, it is not necessary to provide any configuration for providing the transmitter with feedback information, such as the channel estimation and codeword selection unit and the correlation coefficient computation unit.

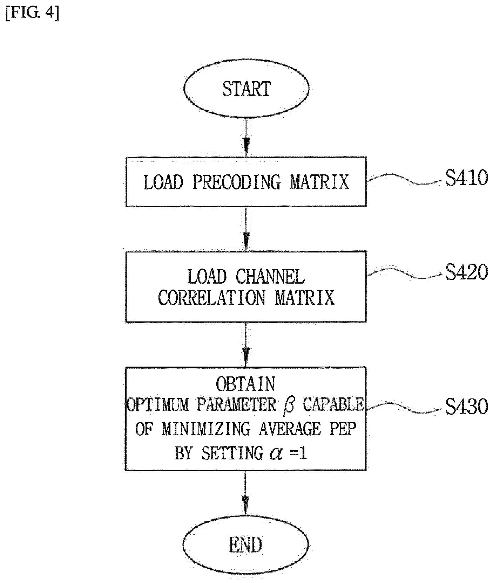

FIG. 4 is a flowchart illustrating an open-loop precoding method in the MIMO spatial multiplexing system according to an embodiment of the present invention.

Referring to FIG. 4, first, the error minimization parameter determination unit 150 loads the precoding matrix from the orthogonal complex matrix condition search unit 140 (in step S410).

In addition, the error minimization parameter determination unit 150 loads the channel correlation matrix (in step S420).

Then, the error minimization parameter determination unit 150 obtains components $\theta$ and $\varphi$ capable of minimizing system errors by assuming the worst channel state (i.e., $\alpha$=1) based on the phase parameters searched for the precoding matrix and the channel correlation matrix (in step S430).

Then, if the components $\theta$ and $\varphi$ are obtained, the error minimization parameter determination unit 150 applies the obtained components to the precoding matrix to determine an optimum precoder.

If the optimum precoder is determined, and the signal to be transmitted is generated, the signal decomposition and modulation unit 110 decomposes the signal to be transmitted to match the number of the Tx antennas and modulates the decomposed signals.

If the decomposed and modulated Tx signals are output, the precoding application unit 120 applies the determined precoder to the decomposed and modulated Tx signals output from the modulation unit and outputs the transmit signals to the Tx unit 130.

The Tx unit 130 transmits each of the Tx signals via corresponding Tx antennas.

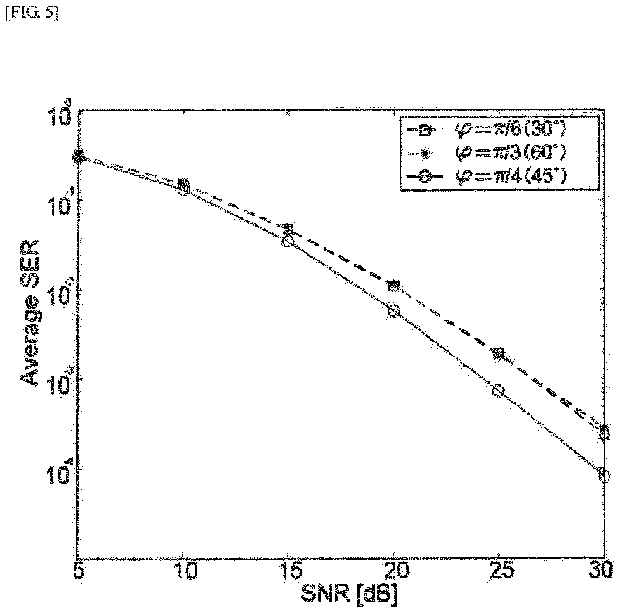

FIG. 5 is an average signal-to-noise ratio (SNR) chart depending on the phase $\varphi$ in the precoding matrix according to an embodiment of the present invention.

Referring to FIG. 5, the experiment was performed for obtaining an average symbol error rate (SER) by assuming that the parameter $\alpha$ is set to "1" ($\alpha$=1), and the parameter $\beta$ has a randomly uniform distribution. The target range was set to "$\pi/6 \leq \varphi \leq \pi/3$".

In FIG. 5, it is recognized that best performance is exhibited when "$\varphi = \pi/4$".

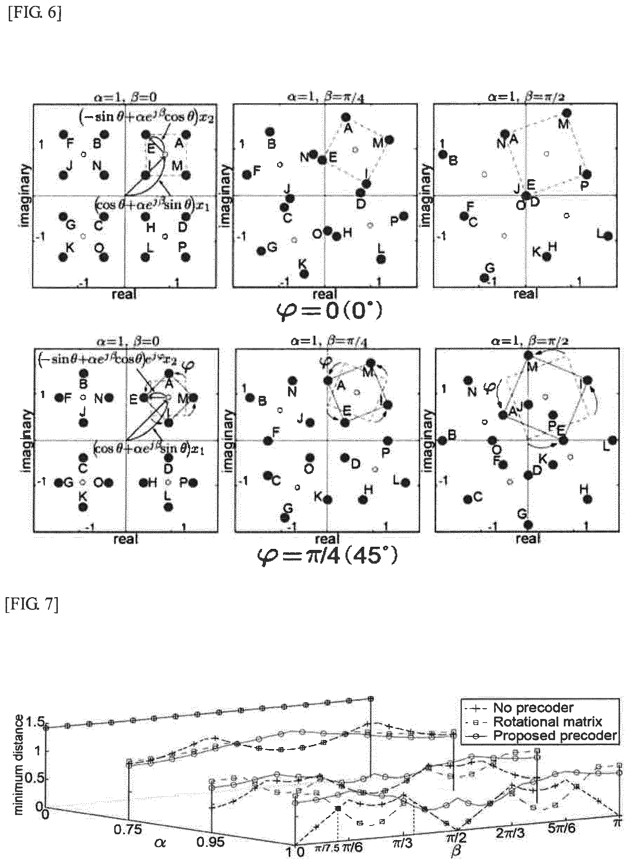

FIG. 6 is a constellation diagram illustrating constellation points depending on the phase $\varphi$ in the precoding matrix according to an embodiment of the present invention.

Referring to FIG. 6, as the distance between nearest neighboring points (i.e., minimum distance) is farther, performance is better.

It is recognized that the distance is relatively farther for the parameter $\beta$ when "$\varphi = \pi/4$".

FIG. 7 is a diagram illustrating the minimum distance depending on the parameter $\beta$ for comparing a conventional technique and a method of the present invention.

It is recognized that the minimum distance of the method of the present invention is generally longer than that of the conventional technique when "$\alpha$=1" and "$0 \leq \beta \leq \pi$".

This tendency applies similarly even in the cases of "$\alpha$=0.75" and "$\alpha$=0.95."

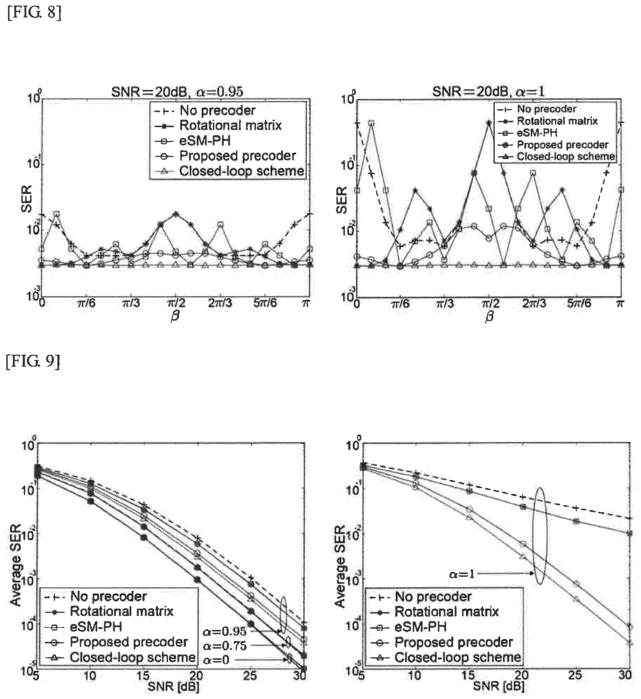

FIG. 8 is a SER chart for comparing performance between the conventional technique and the method of the present invention.

FIG. 8 is a graph for comparing SER performance between the conventional technique and the method of the present invention when the SNR is set to "20dB" when the parameter $\alpha$ is set to "0.95" and "1", and the parameter $\beta$ is set to "$0 \leq \beta \leq \pi$". In this case, the phases are set to "$\theta = \pi/8$" and "$\varphi = \pi/4$".

Referring to FIG. 8, it is recognized that performance of the method of the present invention is generally superior to that of the conventional technique although it is not perfect as much as the closed-loop scheme.

FIG. 9 is an average SER chart for comparing average SER performance against the SNR between the conventional technique and the method of the present invention.

FIG. 9 is a graph for comparing average SER performance against the SNR between the conventional technique and the method of the present invention when the parameter $\alpha$ is set to "0", "0.75", "0.95", and "1", and the parameter $\beta$ has a randomly uniform distribution.

Referring to FIG. 9, it is recognized that the method of the present invention has better performance than that of the conventional technique under a relatively high correlation ($\alpha$=0.95 and 1).

In addition, it is recognized that there is no performance degradation under a low correlation or no correlation ($\alpha$=0.75 or 0).

[Reference Symbols and Numerals]

| | |
|---|---|
| 100 | TRANSMITTER |
| 200 | RECEIVER |
| 110 | SIGNAL DECOMPOSITION AND MODULATION UNIT |
| 120 | PRECODING APPLICATION UNIT |
| 130 | Tx UNIT |
| 140 | ORTHOGONAL COMPLEX MATRIX CONDITION SEARCH UNIT |
| 150 | ERROR MINIMIZATION PARAMETER DETERMINATION UNIT |
| 210 | Rx UNIT |
| 220 | CHANNEL ESTIMATION AND DEMODULATION UNIT |

**Claims**

1. An open-loop precoder for a multiple-input multiple-output (MIMO) spatial multiplexing system having a transmitter that is provided with at least two transmit antennas and is configured to transmit spatially multiplexed signals and a receiver that is provided with at least two receive antennas and is configured to receive the spatially multiplexed signals from the transmitter, the open-loop precoder comprising:

   a signal decomposition and modulation unit (110) configured to decompose a transmit signal to match a number of the at least two transmit antennas and to modulate the decomposed signals;
   a search unit (140) storing a precoding matrix for the number of the at least two transmit antennas, wherein the precoding matrix includes a rotational matrix and a phase rotation matrix and wherein the precoding matrix can be expressed as

   $$\mathbf{F} = \begin{bmatrix} \cos\theta & -\sin\theta \\ \sin\theta & \cos\theta \end{bmatrix} \begin{bmatrix} 1 & 0 \\ 0 & e^{j\varphi} \end{bmatrix},$$

   wherein a first term is the rotational matrix depending on a phase $\theta$ of the rotational matrix, and a second term is the phase rotation matrix depending on a phase $\varphi$ of the phase rotation matrix;
   a determination unit (150) configured to determine an optimum of the parameters $(\theta)$, $(\varphi)$ for the precoding matrix such that a system error is minimized by assuming a worst channel state;
   a precoding application unit (120) configured to apply a precoding matrix having the optimum $\theta$ and $\varphi$ to modulated signals output from the signal decomposition and modulation unit; and
   a transmit unit (130) configured to transmit each of precoded signals via the at least two transmit antennas,

   wherein determining the optimum $\theta$ and $\varphi$ comprises

   $$\theta_{opt}, \varphi_{opt} = \arg\min P_e(\theta, \varphi),$$

   wherein $P_e$ is an average pairwise error probability (PEP) defined as

   $$P_e(\theta, \varphi) = E\left\{ \sum_{i=1}^{M^{N_T}} \sum_{j=1, i \neq j}^{M^{N_T}} PEP_{ij} \right\}$$

   where "$M$" denotes a modulation order, "$N_T$" denotes the number of the at least two transmit antennas and the pairwise error probability$_{i,j}$ ($PEP_{i,j}$) is a PEP between two codewords $x_i$ and $x_j$ and is defined as

$$PEP_{i,j} \leq \frac{1}{\left(\frac{SNR}{4N_T} \left\| R_T^{\frac{1}{2}} F(x_i - x_j) \right\|^2 \right)^{N_R}}$$

wherein "$R_T$" denotes a channel correlation matrix, "$N_R$" denotes a number of the at least two receive antennas and "$(x_i\text{-}x_j)$" denotes a difference of codewords depending on the modulation order, and
wherein the channel correlation matrix is defined as

$$R_T = \begin{bmatrix} 1 & \alpha e^{j\beta} \\ \alpha e^{-j\beta} & 1 \end{bmatrix}, \; 0 \leq \alpha \leq 1, \; 0 \leq \beta \leq 2\pi$$

wherein $\alpha$ is a transmit correlation coefficient for the phases of each component of the precoding matrix, wherein $\alpha$ is set to 0 under a best channel state and to 1 under a worst channel state, wherein an optimum $\beta$ capable of minimizing the average PEP is obtained by setting $\alpha$ to 1 in the channel correlation matrix, and
wherein
the optimum phase $\theta$ is obtained such that the average PEP is minimized by setting the phase $\varphi$ and setting $\alpha$ to 1 assuming a worst channel state.

**2.** The open-loop precoder of the MIMO spatial multiplexing system according to claim 1, wherein the phase $\varphi$ is set to $\pi/4$ ($\varphi=\pi/4$) or varied within a range of $\pi/6 \leq \varphi \leq \pi/3$.

**3.** An open-loop precoding method in a multiple-input multiple-output (MIMO) spatial multiplexing system having a transmitter that is provided with at least two transmit antennas and is configured to transmit spatially multiplexed signals and a receiver that is provided with at least two receive antennas and is configured to receive the spatially multiplexed signals from the transmitter, the open-loop precoding method comprising:

decomposing a transmit signal in the MIMO spatial multiplexing system to match a number of the at least two transmit antennas and modulating the decomposed signals;

loading a precoding matrix (S410) for the number of the transmit antennas, wherein the precoding matrix includes a rotational matrix and a phase rotation matrix and

wherein the precoding matrix can be expressed as

$$\mathbf{F} = \begin{bmatrix} \cos\theta & -\sin\theta \\ \sin\theta & \cos\theta \end{bmatrix} \begin{bmatrix} 1 & 0 \\ 0 & e^{j\varphi} \end{bmatrix},$$

wherein a first term is the rotational matrix depending on a phase $\theta$ of the rotational matrix, and a second term is the phase rotation matrix depending on a phase (p of the phase rotation matrix;
determining an optimum of the parameters ($\theta$, $\varphi$) for the precoding matrix such that an error is minimized by assuming a worst channel state,

and applying a precoding matrix having the optimum $\theta$ and $\varphi$ to modulated signals; and
transmitting each of precoded signals via the at least two transmit antennas, wherein determining the optimum $\theta$ and $\varphi$ comprises

$$\theta_{opt}, \varphi_{opt} = \arg \min P_e(\theta, \varphi),$$

wherein $P_e$ is an average pairwise error probability (PEP) defined as

$$P_e(\theta, \varphi) = E\left\{\sum_{i=1}^{M^{N_T}} \sum_{j=1, i \neq j}^{M^{N_T}} PEP_{i,j}\right\},$$

where "$M$" denotes a modulation order, "$N_T$" denotes the number of the at least two transmit antennas and the pairwise error probability$_{i,j}$ (PEPij) is a PEP between two codewords x$_i$ and x$_j$ and is defined as

$$PEP_{i,j} \leq \frac{1}{\left(\frac{SNR}{4N_T} \left\| R_T^{\frac{1}{2}} F(x_i - x_j) \right\|^2\right)^{N_R}},$$

wherein "$R_T$" denotes a channel correlation matrix, "$N_R$" denotes the number of the at least two receive antennas and "$(x_i\text{-}x_j)$" denotes a difference of codewords depending on the modulation order,
and wherein the channel correlation matrix (S420) is defined as

$$R_T = \begin{bmatrix} 1 & \alpha e^{j\beta} \\ \alpha e^{-j\beta} & 1 \end{bmatrix}, \quad 0 \leq \alpha \leq 1, \quad 0 \leq \beta \leq 2\pi,$$

wherein $\alpha$ is a transmit correlation coefficient for the phases of each component of the precoding matrix, wherein $\alpha$ is set to 0 under a best channel state and to 1 under a worst channel state, wherein $\beta$ capable of minimizing the average PEP is obtained by setting $\alpha$ to 1 in the channel correlation matrix (S430), and wherein the optimum phase $\theta$ is obtained such that the average PEP is minimized by setting the phase $\varphi$ and setting $\alpha$ to 1 assuming a worst channel state.

4. The open-loop precoding method in the MIMO spatial multiplexing system according to claim 3, wherein the phase $\varphi$ is set to $\pi/4$ ($\varphi=\pi/4$) or varied within a range of $\pi/6 \leq \varphi \leq \pi/3$.

**Patentansprüche**

1. Vorkodierer mit offenem Regelkreis für ein Multiple-Input-Multiple-Output (MIMO)-Raummultiplexsystem mit einem Sender, der mit zumindest zwei Sendeantennen versehen und so konfiguriert ist, dass er räumlich gemultiplexte Signale sendet, und einem Empfänger, der mit zumindest zwei Empfangsantennen versehen und so konfiguriert ist, dass er die räumlich gemultiplexten Signale von dem Sender empfängt, wobei der Vorkodierer mit offenem Regelkreis aufweist:

eine Signalzerlegungs- und Modulationseinheit (110), die so konfiguriert ist, dass sie ein Sendesignal zerlegt, so dass es zu einer Zahl der zumindest zwei Sendeantennen passt, und die zerlegten Signale moduliert;
eine Sucheinheit (140), die eine Vorkodiermatrix für die Zahl der zumindest zwei Sendeantennen speichert, wobei die Vorkodiermatrix eine Rotationsmatrix und eine Phasenrotationsmatrix beinhaltet, und wobei die Vorkodiermatrix durch die folgende Gleichung ausgedrückt wird:

$$\mathbf{F} = \begin{bmatrix} \cos\theta & -\sin\theta \\ \sin\theta & \cos\theta \end{bmatrix} \begin{bmatrix} 1 & 0 \\ 0 & e^{j\varphi} \end{bmatrix}$$

wobei ein erster Term die Rotationsmatrix ist, die von einer Phase θ der Rotationsmatrix abhängt, und ein zweiter Term die Phasenrotationsmatrix ist, die von einer Phase φ der Phasenrotationsmatrix abhängt;
eine Bestimmungseinheit (150), die so konfiguriert ist, dass sie ein Optimum der Parameter (θ), (φ) für die Vorkodiermatrix bestimmt, so dass ein Systemfehler durch das Annehmen eines schlechtesten Kanalzustands minimiert wird;
eine Vorkodieranwendungseinheit (120), die so konfiguriert ist, dass sie eine Vorkodiermatrix mit dem optimalen

θ und φ auf modulierte Signale anwendet, die von der Signalzerlegungs- und Modulationseinheit ausgegeben werden; und
eine Sendeeinheit (130), die so konfiguriert ist, dass sie jedes der vorkodierten Signale über die zumindest zwei Sendeantennen überträgt,
wobei das Bestimmen des optimalen θ und φ aufweist

$$\theta_{opt}, \varphi_{opt} = \arg \min P_e(\theta, \varphi) \ ,$$

wobei $P_e$ eine durchschnittliche paarweise Fehlerwahrscheinlichkeit (PEP) ist, die als

$$P_e(\theta, \varphi) = E\left\{\sum_{i=1}^{M^{N_T}} \sum_{j=1, i\neq j}^{M^{N_T}} PEP_{i,j}\right\}$$

definiert ist, wobei "M" eine Modulationsfolge anzeigt, "$N_T$" die Anzahl der zumindest zwei Sendeantennen anzeigt und die paarweise Fehlerwahrscheinlichkeit$_{i,j}$ ($PEP_{i,j}$) eine PEP zwischen zwei Codewörtern $x_i$ und $x_j$ ist und wie folgt definiert ist:

$$PEP_{i,j} \leq \frac{1}{\left(\frac{SNR}{4N_T}\left\|R_T^{\frac{1}{2}}F(x_i - x_j)\right\|^2\right)^{N_R}}$$

wobei "$R_T$" eine Kanalkorrelationsmatrix anzeigt, "$N_R$" eine Anzahl der zumindest zwei Empfangsantennen anzeigt und "($x_i$-$x_j$)" einen Unterschied der Codewörter abhängig von der Modulationsfolge anzeigt, und
wobei die Kanalkorrelationsmatrix wie folgt definiert ist:

$$R_T = \begin{bmatrix} 1 & \alpha e^{j\beta} \\ \alpha e^{-j\beta} & 1 \end{bmatrix}, \ 0 \leq \alpha \leq 1, \ 0 \leq \beta \leq 2\pi$$

wobei α ein Sendekorrelationskoeffizient für die Phasen jeder Komponente der Vorkodiermatrix ist, wobei α in einem besten Kanalzustand auf 0 eingestellt ist und in einem schlechtesten Kanalzustand auf 1 eingestellt ist, wobei ein optimales β, das in der Lage ist, die durchschnittliche PEP zu minimieren, erhalten wird, indem α in der Kanalkorrelationsmatrix auf 1 eingestellt wird, und
wobei
die optimale Phase θ so erhalten wird, dass die durchschnittliche PEP unter der Annahme eines schlechtesten Kanalzustands durch Einstellen der Phase φ und Einstellen von α auf 1 minimiert wird.

2. Vorkodierer mit offenem Regelkreis des Multiple-Input-Multiple-Output (MIMO)-Raummultiplexsystems nach Anspruch 1, wobei die Phase φ auf $\pi/4$ (φ=$\pi/4$) eingestellt ist oder in einem Bereich von $\pi/6<\varphi<\pi/3$ variiert ist.

3. Vorkodierverfahren mit offenem Regelkreis in einem Multiple-Input-Multiple-Output (MIMO)-Raummultiplexsystem mit einem Sender, der mit zumindest zwei Sendeantennen versehen ist und so konfiguriert ist, dass er räumlich gemultiplexte Signale sendet, und mit einem Empfänger, der mit zumindest zwei Empfangsantennen versehen und so konfiguriert ist, dass er die räumlich gemultiplexten Signale von dem Sender empfängt, wobei das Vorkodierverfahren mit offenem Regelkreis aufweist:

Zerlegen eines Sendesignals in dem MIMO-Raummultiplexsystem, so dass es zu einer Anzahl der zumindest zwei Sendeantennen passt und Modulieren der zerlegten Signale;
Laden einer Vorkodiermatrix (S410) für die Anzahl der Sendeantennen, wobei die Vorkodiermatrix eine Rotationsmatrix und eine Phasenrotationsmatrix beinhaltet, und
wobei die Vorkodiermatrix durch die folgende Gleichung ausgedrückt wird:

$$F = \begin{bmatrix} \cos\theta & -\sin\theta \\ \sin\theta & \cos\theta \end{bmatrix} \begin{bmatrix} 1 & 0 \\ 0 & e^{j\varphi} \end{bmatrix}$$

wobei ein erster Term die Rotationsmatrix ist, die von einer Phase $\theta$ der Rotationsmatrix abhängt, und ein zweiter Term die Phasenrotationsmatrix ist, die von einer Phase $\varphi$ der Phasenrotationsmatrix abhängt;
Bestimmen eines Optimums der Parameter ($\theta$, $\varphi$) für die Vorkodiermatrix, so dass ein Fehler durch Annehmen eines schlechtesten Kanalzustands minimiert wird, und Anwenden einer Vorkodiermatrix mit den optimalen $\theta$ und $\varphi$ auf modulierte Signale; und
Senden jedes der vorkodierten Signale über die zumindest zwei Sendeantennen, wobei das Bestimmen des optimalen $\theta$ und $\varphi$ aufweist:

$$\theta_{opt}, \varphi_{opt} = \arg\min P_e(\theta, \varphi) \quad ,$$

wobei $P_e$ eine durchschnittliche paarweise Fehlerwahrscheinlichkeit (PEP) ist, die als

$$P_e(\theta, \varphi) = E\left\{ \sum_{i=1}^{M^{N_T}} \sum_{j=1, i\neq j}^{M^{N_T}} PEP_{i,j} \right\}$$

definiert ist, wobei "M" eine Modulationsfolge anzeigt, "$N_T$" die Anzahl der zumindest zwei Sendeantennen anzeigt und die paarweise Fehlerwahrscheinlichkeit$_{i,j}$ ($PEP_{i,j}$) eine PEP zwischen zwei Codewörtern $x_i$ und $x_j$ ist und wie folgt definiert ist:

$$PEP_{i,j} \leq \frac{1}{\left( \frac{SNR}{4N_T} \left\| R_T^{\frac{1}{2}} F(x_i - x_j) \right\|^2 \right)^{N_R}}$$

wobei "$R_T$" eine Kanalkorrelationsmatrix anzeigt, "$N_R$" eine Anzahl der zumindest zwei Empfangsantennen anzeigt und "($x_i$-$x_j$)" einen Unterschied der Codewörter abhängig von der Modulationsfolge anzeigt, und wobei die Kanalkorrelationsmatrix (S420) wie folgt definiert ist:

$$R_T = \begin{bmatrix} 1 & \alpha e^{j\beta} \\ \alpha e^{-j\beta} & 1 \end{bmatrix}, \quad 0 \leq \alpha \leq 1, \quad 0 \leq \beta \leq 2\pi$$

wobei $\alpha$ ein Sendekorrelationskoeffizient für die Phasen jeder Komponente der Vorkodiermatrix ist, wobei $\alpha$ in einem besten Kanalzustand auf 0 eingestellt ist und in einem schlechtesten Kanalzustand auf 1 eingestellt ist, wobei ein optimales $\beta$, das in der Lage ist, die durchschnittliche PEP zu minimieren, erhalten wird, indem $\alpha$ in der Kanalkorrelationsmatrix (S430) auf 1 eingestellt wird, und wobei die optimale Phase $\theta$ so erhalten wird, dass die durchschnittliche PEP unter der Annahme eines schlechtesten Kanalzustands durch Einstellen der Phase $\varphi$ und Einstellen von $\alpha$ auf 1 minimiert wird.

4. Vorkodierverfahren mit offenem Regelkreis in dem MIMO-Raummultiplexsystem nach Anspruch 3, wobei die Phase $\varphi$ auf $\pi/4$ ($\varphi=\pi/4$) eingestellt ist oder in einem Bereich von $\pi/6 \leq \varphi \leq \pi/3$ variiert ist.

**Revendications**

1. Précodeur en boucle ouverte pour un système de multiplexage spatial à entrées multiples et sorties multiples (MIMO) ayant un émetteur qui est muni d'au moins deux antennes émettrices et est configuré pour transmettre des signaux multiplexés spatialement et un récepteur qui est muni d'au moins deux antennes réceptrices et est configuré pour recevoir les signaux multiplexés spatialement provenant de l'émetteur, le précodeur en boucle ouverte comprenant :

une unité de décomposition et de modulation de signal (110) configurée pour décomposer un signal de transmission pour correspondre à un nombre des au moins deux antennes émettrices et pour moduler les signaux décomposés ;

une unité de recherche (140) stockant une matrice de précodage pour le nombre des au moins deux antennes émettrices,

dans lequel la matrice de précodage comprend une matrice rotationnelle et une matrice de rotation de phase et dans lequel la matrice de précodage peut être exprimée par

$$\mathbf{F} = \begin{bmatrix} \cos\theta & -\sin\theta \\ \sin\theta & \cos\theta \end{bmatrix} \begin{bmatrix} 1 & 0 \\ 0 & e^{j\varphi} \end{bmatrix},$$

où un premier terme est la matrice de rotationnelle dépendant d'une phase $\theta$ de la matrice rotationnelle et un deuxième terme est la matrice de rotation de phase dépendant d'une phase $\varphi$ de la matrice de rotation de phase ;

une unité de détermination (150) configurée pour déterminer des paramètres ($\theta$), ($\varphi$) optimaux pour la matrice de précodage de manière qu'une erreur de système soit minimisée en supposant un pire état de canal ;

une unité d'application de précodage (120) configurée pour appliquer une matrice de précodage ayant les $\theta$ et $\varphi$ optimaux pour des signaux modulés délivrés en sortie par l'unité de décomposition et de modulation de signal ; et

une unité de transmission (130) configurée pour transmettre chacun des signaux précodés par le biais des au moins deux antennes émettrices,

dans lequel la détermination des $\theta$ et $\varphi$ optimaux comprend

$$\theta_{opt}, \varphi_{opt} = \arg \min P_e(\theta, \varphi),$$

où $P_e$ est une probabilité d'erreur par paire (PEP) moyenne définie par

$$P_e(\theta, \varphi) = E\left\{ \sum_{i=1}^{M^{N_T}} \sum_{j=1, i\neq j}^{M^{N_T}} PEP_{i,j} \right\}$$

où « M » désigne un ordre de modulation, « $N_T$ » désigne le nombre des au moins deux antennes émettrices et la probabilité d'erreur par paire$_{i,j}$ (PEP$_{i,j}$) est une PEP entre deux mots de code $x_i$ et $x_j$ et est définie par

$$PEP_{i,j} \leq \frac{1}{\left( \frac{SNR}{4N_T} \left\| R_T^{\frac{1}{2}} F(x_i - x_j) \right\|^2 \right)^{N_R}}$$

où « $R_T$ » désigne une matrice de corrélation de canal, « $N_R$ » désigne un nombre des au moins deux antennes réceptrices et « ($x_i$ - $x_j$) » désigne une différence de mots de code en fonction de l'ordre de modulation, et dans lequel la matrice de corrélation de canal est définie par

$$R_T = \begin{bmatrix} 1 & \alpha e^{j\beta} \\ \alpha e^{-j\beta} & 1 \end{bmatrix}, \ 0 \leq \alpha \leq 1, \ 0 \leq \beta \leq 2\pi$$

où $\alpha$ est un coefficient de corrélation de transmission pour les phases de chaque composant de la matrice de précodage, où $\alpha$ est mis à 0 dans un meilleur état de canal et à 1 dans un pire état de canal, où un $\beta$ optimal capable de minimiser la PEP moyenne est obtenu en mettant $\alpha$ à 1 dans la matrice de corrélation de canal, et dans lequel

la phase $\theta$ optimale est obtenue de manière que la PEP moyenne soit minimisée en réglant la phase $\varphi$ et en mettant $\alpha$ à 1 en supposant un pire état de canal.

2. Précodeur en boucle ouverte du système de multiplexage spatial MIMO selon la revendication 1, dans lequel la phase φ est réglée à n/4 (φ = π/4) ou variée dans une plage de n/6 ≤ φ ≤ n/3.

3. Procédé de précodage en boucle ouverte dans un système de multiplexage spatial à entrées multiples et sorties multiples (MIMO) ayant un émetteur qui est muni d'au moins deux antennes émettrices et est configuré pour transmettre des signaux multiplexés spatialement et un récepteur qui est muni d'au moins deux antennes réceptrices et est configuré pour recevoir les signaux multiplexés spatialement provenant de l'émetteur, le procédé en boucle ouverte comprenant :

la décomposition d'un signal de transmission dans le système de multiplexage spatial MIMO pour correspondre à un nombre des au moins deux antennes émettrices et la modulation des signaux décomposés ;
le chargement d'une matrice de précodage (S410) pour le nombre des antennes émettrices, dans lequel la matrice de précodage comprend une matrice rotationnelle et une matrice de rotation de phase et
dans lequel la matrice de précodage peut être exprimée par

$$\mathbf{F} = \begin{bmatrix} \cos\theta & -\sin\theta \\ \sin\theta & \cos\theta \end{bmatrix} \begin{bmatrix} 1 & 0 \\ 0 & e^{j\varphi} \end{bmatrix},$$

où un premier terme est la matrice de rotationnelle dépendant d'une phase θ de la matrice rotationnelle et un deuxième terme est la matrice de rotation de phase dépendant d'une phase φ de la matrice de rotation de phase ;
la détermination des paramètres (θ, φ) optimaux pour la matrice de précodage de manière qu'une erreur de système soit minimisée en supposant un pire état de canal, et l'application d'une matrice de précodage ayant les θ et φ optimaux pour des signaux modulés ; et
la transmission de chacun des signaux précodés par le biais des au moins deux antennes émettrices,
dans lequel la détermination des θ et φ optimaux comprend

$$\theta_{opt}, \varphi_{opt} = \arg \min P_e(\theta, \varphi),$$

où $P_e$ est une probabilité d'erreur par paire (PEP) moyenne définie par

$$P_e(\theta, \varphi) = E \left\{ \sum_{i=1}^{M^{N_T}} \sum_{j=1, l \neq j}^{M^{N_T}} PEP_{i,j} \right\}$$

où « M » désigne un ordre de modulation, « $N_T$ » désigne le nombre des au moins deux antennes émettrices et la probabilité d'erreur par paire$_{i,j}$ (PEP$_{i,j}$) est une PEP entre deux mots de code $x_i$ et $x_j$ et est définie par

$$PEP_{i,j} \leq \cfrac{1}{\left( \cfrac{SNR}{4N_T} \left\| R_T^{\frac{1}{2}} F(x_i - x_j) \right\|^2 \right)^{N_R}}$$

où « $R_T$ » désigne une matrice de corrélation de canal, « $N_R$ » désigne le nombre des au moins deux antennes réceptrices et « ($x_i$ - $x_j$) désigne une différence de mots de code en fonction de l'ordre de modulation, et dans lequel la matrice de corrélation de canal (S240) est définie par

$$R_T = \begin{bmatrix} 1 & \alpha e^{j\beta} \\ \alpha e^{-j\beta} & 1 \end{bmatrix}, \ 0 \leq \alpha \leq 1, \ 0 \leq \beta \leq 2\pi$$

où α est un coefficient de corrélation de transmission pour les phases de chaque composant de la matrice de précodage, où α est mis à 0 dans un meilleur état de canal et à 1 dans un pire état de canal, où un β optimal capable de minimiser la PEP moyenne est obtenu en mettant α à 1 dans la matrice de corrélation de canal (S430), et dans lequel

la phase θ optimale est obtenue de manière que la PEP moyenne soit minimisée en réglant la phase φ et en mettant α à 1 en supposant un pire état de canal.

4. Procédé de précodage en boucle ouverte dans le système de multiplexage spatial MIMO selon la revendication 3, dans lequel la phase φ est réglée à n/4 (φ = n/4) ou variée dans une plage de π/6 ≤ φ ≤ n/3.

[FIG. 1]

[FIG. 2]

[FIG. 3]

[FIG. 4]

```
          ┌─────────────┐
          │    START    │
          └──────┬──────┘
                 │
                 ▼
    ┌────────────────────────┐
    │  LOAD PRECODING MATRIX │ ─────── S410
    └───────────┬────────────┘
                │
                ▼
    ┌────────────────────────┐
    │      LOAD CHANNEL       │ ─────── S420
    │   CORRELATION MATRIX    │
    └───────────┬────────────┘
                │
                ▼
    ┌────────────────────────┐
    │         OBTAIN          │
    │ OPTIMUM PARAMETER β     │ ─────── S430
    │    CAPABLE OF           │
    │ MINIMIZING AVERAGE PEP  │
    │   BY SETTING α =1       │
    └───────────┬────────────┘
                │
                ▼
          ┌─────────────┐
          │     END     │
          └─────────────┘
```

[FIG. 5]

[FIG. 6]

$$\varphi = 0 \, (0°)$$

$$\varphi = \pi/4 \, (45°)$$

[FIG. 7]

[FIG. 8]

[FIG. 9]

**EP 3 002 887 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20140131679
- KR 20150010490 A
- KR 20130033961 A
- KR 1020100114346